# EUROPEAN PATENT SPECIFICATION

(11) **EP 2 432 050 B1**
(45) Date of publication and mention of the grant of the patent: **01.04.2015**
(21) Application number: 11172019.9
(22) Date of filing: 29.06.2011
(51) Int. Cl.: H01M 4/38, H01M 4/62, H01M 10/0525

(54) **Negative active material for rechargeable lithium battery and rechargeable lithium battery including the same**
Negatives Aktivmaterial für eine wiederaufladbare Lithiumbatterie und wiederaufladbare Lithiumbatterie damit
Matériau actif négatif pour batterie au lithium rechargeable et batterie au lithium rechargeable l'incluant

(30) Priority: 16.09.2010 US 383701 P; 31.05.2011 US 201113149627
(43) Date of publication of application: 21.03.2012
(73) Proprietor: Samsung SDI Co., Ltd., Yongin-si, Gyeonggi-do (KR)
(72) Inventor: Ishida, Sumihito, Gyeonggi-do (KR); Lee, Jong-Ki, Gyeonggi-do (KR); Sheem, Kyeu-Yoon, Gyeonggi-do (KR); Lee, Mee-Young, Gyeonggi-do (KR)
(74) Representative: Mounteney, Simon James

(56) References cited:
- US-A1- 2005 214 644
- US-A1- 2006 275 668
- US-A1- 2008 261 112

## Description

### BACKGROUND

### 1. Field

This disclosure relates to a negative active material for a rechargeable lithium battery, and a rechargeable lithium battery including the same.

### 2. Description of the Related Art

Lithium rechargeable batteries have recently drawn attention as a power source for small portable electronic devices. Since they use an organic electrolyte solution, they have twice as much discharge voltage than conventional batteries using an alkali aqueous solution, and accordingly have high energy density.

For positive active materials for a rechargeable lithium battery, a lithium-transition element composite oxide capable of intercalating lithium such as LiCoO₂, LiMn₂O₄, LiNi₁₋ₓCoₓO₂ (0<x<1), and so on has been researched.

For a negative active material, various carbon-based material capable of intercalating/deintercalating lithium, such as artificial graphite, natural graphite, and hard carbon has been used.

In addition, as there is increasing requirements for a battery with high energy density, more attention has been paid to Si, Sn, and Ge alloyed with lithium, an oxide thereof, and an alloy thereof as a negative active material with high theoretical capacity density. In particular, the Si oxide has been widely researched regarding its good cycle characteristic. However, the Si oxide has a problem of having large irreversible capacity and deteriorating energy density of a battery to compensate Li, since oxygen therein reacts with Li and forms Li₂O (lithium oxide). In addition, the Li₂O is not participated in the charge and discharge but expands an electrode, deteriorating the energy density of a battery. Unless the Si oxide compensates the lithium, a battery may have not improved energy density. Furthermore, the Li₂O includes an alkali component and reacts with an electrolyte at a high temperature, and thus causes a problem of gas production, deteriorating capacity, and the like.

US 2006/275668 discloses an anode material of the silicon-carbon composite type, for a lithium cell, having a high mass capacity and good cycling stability. This material is obtained by a preparation method comprising the steps consisting of: a) providing a silicon powder obtained by the plasma-enhanced chemical vapour deposition (PECVD) technique or by CO2 laser, the size of the silicon particles being less than 100 nm; b) mixing the silicon powder with a carbon-containing polymer, and c) carrying out the pyrolysis of the mixture.

US 2008/261112 discloses an electrode material that includes a plurality of particles capable of absorbing and desorbing lithium, and a plurality of nanowires capable of absorbing and desorbing lithium. The particles and the nanowires include silicon atoms. The plurality of nanowires are entangled with each other to form a network, and the network is in contact with at least two of the plurality of particles. Said electrode material may comprise a silicon carbide material.

US 2005/214644 discloses silicon composite particles prepared by sintering primary fine particles of silicon, silicon alloy or silicon oxide together with an organosilicon compound. Sintering of the organosilicon compound results in a silicon-base inorganic compound which serves as a binder. Each particle has the structure that silicon or silicon alloy fine particles are dispersed in the silicon-base inorganic compound binder, and voids are present within the particle.

### SUMMARY

An exemplary embodiment of the present invention provides a negative active material for a rechargeable lithium battery having high density and excellent initial charge and discharge efficiency as well as cycle-life characteristic.

Another embodiment of the present invention provides a rechargeable lithium battery including the negative active material.

According to one embodiment of the present invention, a negative active material including a silicon-containing compound represented by the following Chemical Formula 1 is provided.

SiCₓ [Chemical Formula 1]

In Chemical Formula 1, 0.05 ≤ x ≤ 1.5.

The x may be in a range of 0.25 to 0.95.

The silicon-containing compound may have a peak ranging from 740cm⁻¹ to 780cm⁻¹ in Fourier transform infrared spectroscopy (FT-IR analysis).

The silicon-containing compound may be amorphous.

The silicon-containing compound may include a carbon layer on the surface thereof. Herein, the carbon layer may be included in an amount of 5 to 20 wt% based on the entire weight of the silicon-containing compound and the carbon layer.

The negative active material may further include an amorphous carbon-based material as well as the silicon-containing compound.

The silicon-containing compound and the amorphous carbon-based material are mixed in a ratio ranging from 90:10 wt% to 10:90 wt%, or from 20:80 wt% to 60:40 wt% in an another embodiment.

When the silicon-containing compound and the amorphous carbon-based material are mixed together, the silicon-containing compound may have an average particle size ranging from 0.1µm to 30µm.

The amorphous carbon-based material may have an interlayer spacing d002 ranging from 0.34nm to 0.4nm in a 002 side and a crystallite size (Lc) ranging from 2nm to 5nm in X-ray diffraction (XRD) measurement using CuKα.

According to an embodiment of the present invention, provided is a rechargeable lithium battery including a negative electrode including the negative active material according to another embodiment of the present invention, a positive electrode including a positive active material, and a non-aqueous electrolyte.

Therefore, a rechargeable lithium battery including the negative active material according to the embodiment of the present invention has high energy density and excellent initial charge and discharge efficiency as well as cycle-life characteristic.

According to a first aspect of the present invention, there is provided a negative active material as set out in claim 1. Preferred features of this aspect are set out in claims 2 to 13. According to a second aspect of the present invention, there is provided a rechargeable lithium battery as set out in claim 14.

### BRIEF DESCRIPTION OF THE DRAWINGS

FIG. 1 schematically shows the structure of a rechargeable lithium battery according to one embodiment.
FIG. 2 is a graph showing initial charge and discharge characteristic and efficiency of a half-cell respectively including a negative electrode according to Examples 1 to 3 and Comparative Example 2.
FIG. 3 is a graph showing initial charge and discharge characteristic and efficiency of a half-cell respectively including a negative electrode according to Example 3 and Comparative Examples 1 and 4.
FIG. 4 is a graph showing X-ray diffraction (XRD) results of a material before it is formed into a carbon layer in Example 7 and Comparative Example 4.
FIG. 5 is a graph showing IR analysis results of a material before being formed into a carbon layer in Example 7 and Comparative Example 4.
FIG. 6 shows an electron probe micro-analyzer (EPMA) element analysis result of a SiCₓ (x=0.65) compound before being formed into a carbon layer in Example 7.
FIG. 7 shows the reversible capacity of the amorphous carbon particles used in Example 8.

### DETAILED DESCRIPTION

Exemplary embodiments of the present invention will hereinafter be described in detail. However, these embodiments are only exemplary, and the present invention is not limited thereto.

According to one embodiment of the present invention, a negative active material for a rechargeable lithium battery may include an amorphous silicon-containing compound represented by the following Chemical Formula 1.

SiCₓ [Chemical Formula 1]

In Chemical Formula 1, 0.05 ≤ x ≤ 1.5. The x may be in a range of 0.25 to 0.95. When the x is smaller than 0.05, the particles may be easily broken due to a weak covalent bond, deteriorating the cycle-life characteristic at room temperature and at a high temperature. In addition, when the x is larger than 1.5, a silicon-containing compound may be relatively unstable and may have no lithium intercalation/deintercalation reaction, deteriorating capacity.

Since the silicon-containing compound does not include oxygen as shown in the above Chemical Forumla 1, carbon in the silicon-containing compound does not react with Li to produce Li₂O, and it may control expansion of an active material and prevent the side reaction of Li₂O, a strong alkali, with an electrolyte solution. In other words, in some embodiments, the silicon-containing compound does not contain oxygen, and consists of SiCₓ(0.05 ≤ x ≤ 1.5).

The silicon-containing compound includes a chemically covalent bond of silicon (Si) and carbon (C). In addition, the silicon-containing compound has a peak ranging from 740cm⁻¹ to 780cm⁻¹ in Fourier transform infrared spectroscopy (FT-IR) analysis, showing it has a covalent bond of silicon and carbon. The silicon-containing compound has no peak at 35° to 38° in the XRD measurement using CuKα, showing that it is amorphous.

On the contrary, if silicon and carbon have no chemically covalent bond but are physically mixed with each other as a simple mixture or a composite, it may have no peak in the FT-IR analysis and also no peak at 35° to 38° in the XRD measurement using CuKα. In addition, a silicon carbide with Si and C at an element ratio of 1:1, and with a diamond structure has a crystalline structure and thus a peak at 35 to 38° in the XRD measurement using CuKα.

In this way, a silicon-containing compound according to this embodiment of the present invention includes a chemically covalent bond between silicon and carbon, and thus may prevent a particle from being broken.

The silicon-containing compound may be amorphous. When it is amorphous, the negative active material may improve cycle-life characteristic and particularly the high temperature cycle-life characteristic of a battery.

The silicon-containing compound may further include a carbon layer on the surface thereof. Herein, the carbon layer may be included in an amount of 5 wt% to 20 wt% based on the entire amount of the silicon-containing compound and the carbon layer. When a silicon-containing compound includes a carbon layer on the surface thereof, and particularly a carbon layer within the above amount range, it may further improve electrical conductivity. It may further improve initial charge and discharge efficiency and the cycle-life characteristic of a battery, since the battery is better charged and discharged.

The carbon layer may be formed of amorphous or crystalline carbon.

The silicon-containing compound may be prepared in a sputtering process using Si and C targets. The sputtering process may be appropriately controlled to prepare a composition represented by the above Chemical Formula 1. However, a silicon-containing compound represented by the above Chemical Formula 1 may be prepared in any other method.

The negative active material may further include an amorphous carbon-based material as well as the silicon-containing compound.

When a negative active material is prepared by mixing the silicon-containing compound with an amorphous carbon-based material, the amorphous carbon-based material may compensate the slow charge and discharge speed of the silicon-containing compound. Accordingly, it may make it possible to rapidly charge and discharge a battery and thus is useful for a high power battery.

Illustrated in more detail, when a rechargeable lithium battery including the negative active material prepared by mixing a silicon-containing compound and an amorphous carbon-based material is charged and discharged with a large current of 2 CmAh/cm² or more, lithium ions are inserted into the amorphous carbon-based material. With continuous charge, the lithium is diffused into a solid and then moves into a silicon-containing compound contacting the amorphous carbon-based material. This is why a battery with high-capacity may be rapidly charged.

If crystalline carbon such as graphite is used instead of the amorphous material, lithium ions are inserted into a silicon-containing compound due to large resistance of the graphite, when charged and discharged with a large current of more than 2 CmAh/cm². However, the lithium is diffused at a lower speed inside a silicon-containing compound than a solid, resultantly generating a polarization voltage. Accordingly, a battery cannot be rapidly charged.

When a rechargeable lithium battery including a conventional graphite negative active material with a Li/Li⁺ potential of less than 0.2V is charged with a large current, it cannot be rapidly charged in terms of safety, since the conventional graphite negative active material extracts Li. Recently, a rechargeable lithium battery has been rapidly charged even with a large current by enlarging an electrode area to decrease resistance without changing current per unit area. However, this method sharply decreases substantial energy density due to a volume increase of a current collector, a separator, and the like other than an active material.

In addition, this method has a problem of decreasing the charge speed of a lithium rechargeable battery, because an electrolyte solution may be easily decomposed on the edge of a crystal in a graphite negative active material where lithium is intercalated and deintercalated and produce a decomposed product, an SEI (solid electrolyte interface), on the surface, and lithium may not be diffused in the SEI. Recently, a silicon oxide having high-capacity and excellent cycle-life characteristic has also had a problem of reacting with lithium and thus producing Li₂O, a strong alkali, since the Li₂O decomposes an electrolyte solution as a strong alkali catalyst and thus produces a resistance component. In addition, the silicon oxide produces an SEI layer on the surface during the charge and discharge, increasing electrode resistance. Accordingly, it may not be good for a battery with high power. Furthermore, since a Si or Si alloy including no oxygen has no covalent bond inside the particle, it may be expanded and have a shape change when lithium is inserted therein, and then may be immediately broken on the interface of a crystal, deteriorating the cycle-life characteristic.

In addition, as for a mixed negative active material of a silicon-containing compound and an amorphous carbon-based material, lithium ions in the silicon-containing compound move toward the amorphous carbon-based material having excellent conductivity during the charge and may then be released during the rapid discharge.

Furthermore, an amorphous carbon-based material has better electrical conductivity than crystalline carbon such as graphite and can easily provide electron required for Li oxidation since Li is released as ions, that is to say, it is oxidized. Accordingly, the amorphous carbon material may bring about a better discharge characteristic than crystalline carbon such as graphite.

The silicon-containing compound and the amorphous carbon-based material are mixed in a ratio ranging from 90:10 wt% to 10:90 wt%, or from 20:80 wt% to 60:40 wt% in another embodiment. When the silicon-containing compound is mixed with the amorphous carbon-based material within the ratio range, the negative active material may bring about high energy density as well as maintaining high input and output characteristics of a rechargeable lithium battery. Herein, the silicon-containing compound may have an average particle size ranging from 0.1µm to 30µm.

The amorphous carbon-based material may have an interlayer spacing (d002) ranging from 0.34nm to 0.4nm on a 002 side and crystallite size (Lc) ranging from 2nm to 5nm in the XRD measurement using CuKα. When the amorphous carbon-based material has the property, lithium ions may be diffused faster and are more easily intercalated/deintercalated.

In addition, the amorphous carbon-based material has reversible capacity in a Li/Li⁺ potential region ranging from 0.2 to 1.5V, and in particular, 70% of the entire reversible capacity in the same potential region.

Another embodiment of the present invention provides a rechargeable lithium battery.

Rechargeable lithium batteries may be classified as lithium ion batteries, lithium ion polymer batteries, and lithium polymer batteries according to the presence of a separator and the kind of an electrolyte used in a battery. Structures and fabricating methods for lithium ion batteries pertaining to this disclosure are well known in the art and are not illustrated in detail here.

According to another embodiment of the present invention, a rechargeable lithium battery includes a negative electrode including a negative active material according to one embodiment, a positive electrode including a positive active material, and a non-aqueous electrolyte.

The negative electrode includes a negative active material layer and a current collector. Herein, the negative active material is sputtered into a thin film as a negative active material layer on a current collector, or is added to a solvent to prepare a negative active material composition as a slurry and then is disposed the negative active material composition is disposed on a current collector. The solvent may include N-methylpyrrolidone and the like. It may be water when a water-soluble binder is used for a negative electrode, but is not limited thereto.

The sputtering process may additionally need no binder to adhere a negative active material on a current collector.

However, the negative active material composition may further include a binder. The negative active material layer may include about 95 to about 99 wt% of the negative active material based on the total weight of the negative active material layer.

The negative active material layer may include about 1 to about 5 wt% of a binder based on the total weight of the negative active material layer.

The binder improves binding properties of the negative active material particles to one another and to a current collector.

The binder includes a non-water-soluble binder, a water-soluble binder, or a combination thereof.

The non-water-soluble binder includes polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, polyamideimide, polyimide, or a combination thereof.

The water-soluble binder includes a styrene-butadiene rubber, an acrylated styrene-butadiene rubber, polyvinyl alcohol, sodium polyacrylate, a copolymer including propylene and a C2 to C8 olefin, a copolymer of (meth)acrylic acid and (meth)acrylic acid alkyl ester, or a combination thereof.

When the water-soluble binder is used as a negative electrode binder, a cellulose-based compound may be further used to provide viscosity. The cellulose-based compound includes one or more of carboxylmethyl cellulose, hydroxypropylmethyl cellulose, methyl cellulose, or alkaline metal salts thereof. The alkaline metal may be Na, K, or Li. The cellulose-based compound may be included in an amount of 0.1 to 3 parts by weight based on 100 parts by weight of the negative active material.

The negative active material composition may further include a solvent, and examples of the solvent include N-methylpyrrolidone and the like, but are not limited thereto.

The current collector includes a copper foil, a nickel foil, a stainless steel foil, a titanium foil, a nickel foam, a copper foam, a polymer substrate coated with a conductive metal, or combinations thereof.

The positive electrode includes a current collector and a positive active material layer disposed on the current collector. The positive active material includes lithiated intercalation compounds that reversibly intercalate and deintercalate lithium ions. The positive active material may include a composite oxide including at least one selected from the group consisting of cobalt, manganese, and nickel, as well as lithium. In particular, the following lithium-containing compounds may be used. LiₐA_{1-b}X_{b}D₂ (0.90 ≤ a ≤ 1.8, 0 ≤ b ≤ 0.5); LiₐE_{1-b}X_{b}O_{2-c}D_{c} (0.90 ≤ a ≤ 1.8, 0 ≤ b ≤ 0.5, 0 ≤ c ≤ 0.05); LiₐE_{2-b}X_{b}O_{4-c}D_{c} (0.90 ≤ a ≤ 1.8, 0 ≤ b ≤ 0.5, 0 ≤ c ≤ 0.05); LiₐNi_{1-b-c}Co_{b}X_{c}Dα (0.90 ≤ a ≤ 1.8, 0 ≤ b ≤ 0.5, 0 ≤ c ≤ 0.05, 0 < α ≤ 2); LiₐNi_{1-b-c}Co_{b}X_{c}O_{2-α}T_{α} (0.90 ≤ a ≤ 1.8, 0 ≤ b ≤ 0.5, 0 ≤ c ≤ 0.05, 0 < α < 2); LiₐNi_{1-b-c}Co_{b}X_{c}O_{2-α}T₂ (0.90 ≤ a ≤ 1.8, 0 ≤ b ≤ 0.5, 0 ≤ c ≤ 0.05, 0 < α < 2); LiₐNi_{1-b-c}Mn_{b}X_{c}D_{α} (0.90 ≤ a ≤ 1.8, 0 ≤ b ≤ 0.5, 0 ≤ c ≤ 0.05, 0 < α ≤ 2); LiₐNi_{1-b-c}Mn_{b}X_{c}O_{2-α}T_{α} (0.90 ≤ a ≤ 1.8, 0 ≤ b ≤ 0.5, 0 ≤ c ≤ 0.05, 0 < α < 2); LiₐNi_{1-b-c}Mn_{b}X_{c}O_{2-α}T₂ (0.90 ≤ a ≤ 1.8, 0 ≤ b ≤ 0.5, 0 ≤ c ≤ 0.05, 0 < α < 2); LiₐNi_{b}E_{c}G_{d}O₂ (0.90 ≤ a < 1.8, 0 ≤ b ≤ 0.9, 0 ≤ c ≤ 0.5, 0.001 ≤ d ≤ 0.1); LiₐNi_{b}Co_{c}Mn_{d}GₑO₂ (0.90 ≤ a ≤ 1.8, 0 ≤ b ≤ 0.9, 0 ≤ c ≤ 0.5, 0 ≤ d ≤ 0.5, 0.001 ≤ e ≤ 0.1); LiₐNiG_{b}O₂ (0.90 ≤ a ≤ 1.8, 0.001 ≤ b ≤ 0.1); LiₐCoG_{b}O₂ (0.90 ≤ a ≤ 1.8, 0.001 ≤ b ≤ 0.1); LiₐMnG_{b}O₂ (0.90 ≤ a ≤ 1.8, 0.001 ≤ b ≤ 0.1); LiₐMn₂G_{b}O₄ (0.90 ≤ a ≤ 1.8, 0.001 ≤ b ≤ 0.1); QO₂; QS₂; LiQS₂; V₂O₅; LiV₂O₅; LiZO₂; LiNiVO₄; Li_{(3-f)}J₂(PO₄)₃(0 ≤ f ≤ 2); Li_{(3-f)}Fe₂(PO₄)₃ (0 ≤ f ≤ 2); and LiFePO₄.

In the above formulas, A is selected from the group consisting of Ni, Co, Mn, and a combination thereof; X is selected from the group consisting of Al, Ni, Co, Mn, Cr, Fe, Mg, Sr, V, a rare earth element, and a combination thereof; D is selected from the group consisting of O, F, S, P, and a combination thereof; E is selected from the group consisting of Co, Mn, and a combination thereof; T is selected from the group consisting of F, S, P, and a combination thereof; G is selected from the group consisting of Al, Cr, Mn, Fe, Mg, La, Ce, Sr, V, and a combination thereof; Q is selected from the group consisting of Ti, Mo, Mn, and a combination thereof; Z is selected from the group consisting of Cr, V, Fe, Sc, Y, and a combination thereof; and J is selected from the group consisting of V, Cr, Mn, Co, Ni, Cu, and a combination thereof.

The compound may have a coating layer on the surface thereof, or may be mixed with another compound having a coating layer. The coating layer may include at least one coating element compound selected from the group consisting of an oxide of a coating element, a hydroxide of a coating element, an oxyhydroxide of a coating element, a carbon oxide of a coating element, and a hydroxyl carbonate of a coating element. The compound for a coating layer may be amorphous or crystalline. The coating element included in the coating layer may include Mg, Al, Co, K, Na, Ca, Si, Ti, V, Sn, Ge, Ga, B, As, Zr, or a mixture thereof. The coating layer may be formed in a method having no adverse influence on properties of a positive active material by including these elements in the compound. For example, the method may include any coating method such as spray coating, dipping, and the like, but is not illustrated in more detail, since it is well-known to those who work in the related field.

In the positive active material layer, the positive active material may be included in an amount of 90 to 98 wt% based on the total weight of the positive active material layer.

The positive active material layer may further include a binder and a conductive material. The binder and the conductive material may be included in an amount of 1 to 5 wt%, based on the total weight of the positive active material layer, respectively.

The binder improves binding properties of positive active material particles to one another and to a current collector. Examples of the binder include at least one selected from polyvinyl alcohol, carboxylmethyl cellulose, hydroxypropyl cellulose, diacetyl cellulose, polyvinylchloride, carboxylated polyvinylchloride, polyvinylfluoride, an ethylene - oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and the like, but are not limited thereto.

The conductive material is included to improve electrode conductivity. Any electrically conductive material may be used as a conductive material, unless it causes a chemical change. Examples of the conductive material include carbon-based materials such as natural graphite, artificial graphite, carbon black, acetylene black, ketjen black, carbon fiber, and the like; metal-based materials including a metal powder or a metal fiber of copper, nickel, aluminum, silver, and the like; a conductive polymer such as a polyphenylene derivative; or a mixture thereof.

The current collector may be Al foil but is not limited thereto.

The positive electrode may be fabricated in a method including mixing an active material, a conductive material, and a binder in a solvent to prepare an active material composition, and coating the composition on a current collector. The electrode manufacturing method is well known and is thus not described in detail in the present specification. The solvent includes N-methylpyrrolidone and the like, but is not limited thereto.

The non-aqueous electrolyte includes a non-aqueous organic solvent and a lithium salt.

The non-aqueous organic solvent serves as a medium of transmitting ions taking part in the electrochemical reaction of the battery.

The non-aqueous organic solvent may include a carbonate-based, ester-based, ether-based, ketone-based, alcohol-based, or aprotic solvent. Examples of the carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. Examples of the ester-based solvent may include methyl acetate, ethyl acetate, n-propyl acetate, dimethylacetate, methylpropionate, ethylpropionate, γ-butyrolactone, decanolide, valerolactone, mevalonolactone, caprolactone, and the like. Examples of the ether-based solvent include dibutyl ether, tetraglyme, diglyme, dimethoxyethane, 2-methyltetrahydrofuran, tetrahydrofuran, and the like, and examples of the ketone-based solvent include cyclohexanone and the like. Examples of the alcohol-based solvent include ethyl alcohol, isopropyl alcohol, and the like, and examples of the aprotic solvent include nitriles such as R-CN (where R is a C2 to C20 linear, branched, or cyclic hydrocarbon, a double bond, an aromatic ring, or an ether bond), amides such as dimethylformamide, dioxolanes such as 1,3-dioxolane, sulfolanes, and the like.

The non-aqueous organic solvent may be used singularly or in a mixture. When the organic solvent is used in a mixture, the mixture ratio can be controlled in accordance with a desirable battery performance.

The carbonate-based solvent may include a mixture with a cyclic carbonate and a linear carbonate. The cyclic carbonate and the chain carbonate are mixed together in a volume ratio of about 1:1 to about 1:9. When the mixture is used as an electrolyte, it may have enhanced performance.

In addition, the non-aqueous organic electrolyte may further include an aromatic hydrocarbon-based solvent as well as the carbonate-based solvent. The carbonate-based solvents and the aromatic hydrocarbon-based solvents may be mixed together in a volume ratio of about 1:1 to about 30:1.

The aromatic hydrocarbon-based organic solvent may be represented by the following Chemical Formula 2.

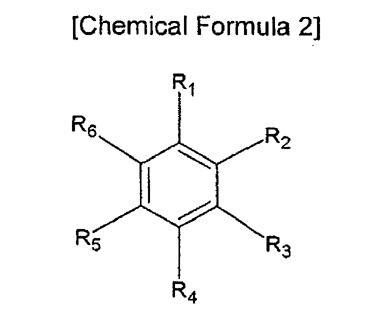

In the above Chemical Formula 2, R₁ to R₆ are independently hydrogen, a halogen, a C1 to C10 alkyl, a C1 to C10 haloalkyl, or a combination thereof.

The aromatic hydrocarbon-based organic solvent may include, but is not limited to, at least one selected from benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 2,3-difluorotoluene, 2,4-difluorotoluene, 2,5-difluorotoluene, 2,3,4-trifluorotoluene, 2,3,5-trifluorotoluene, chlorotoluene, 2,3-dichlorotoluene, 2,4-dichlorotoluene, 2,5-dichlorotoluene, 2,3,4-trichlorotoluene, 2,3,5-trichlorotoluene, iodotoluene, 2,3-diiodotoluene, 2,4-diiodotoluene, 2,5-diiodotoluene, 2,3,4-triiodotoluene, 2,3,5-triiodotoluene, xylene, and a combination thereof.

The non-aqueous electrolyte may further include vinylene carbonate or an ethylene carbonate-based compound represented by the following Chemical Formula 3.

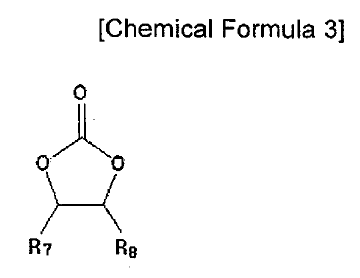

In the above Chemical Formula 3, R₇ and R₈ are independently hydrogen, a halogen, a cyano (CN), a nitro (NO₂) or a C1 to C5 fluoroalkyl, provided that at least one of R₇ and R₈ is a halogen, a nitro (NO₂) or a C1 to C5 fluoroalkyl, and R₇ and R₈ are not simultaneously hydrogen.

Examples of the ethylene carbonate-based compound include difluoroethylene carbonate, chloroethylene carbonate, dichloroethylene carbonate, bromoethylene carbonate, dibromoethylene carbonate, nitroethylene carbonate, cyanoethylene carbonate, fluoroethylene carbonate, and the like. The amount of the additive for improving cycle life may be flexibly used within an appropriate range.

The lithium salt is dissolved in an organic solvent, supplies a battery with lithium ions, basically operates the rechargeable lithium battery, and improves transportation of the lithium ions between positive and negative electrodes. Non-limiting examples of the lithium salt include at least one supporting salt selected from LiPF₆, LiBF₄, LiSbF₆, LiAsF₆, LiN(SO₂C₂F₅)₂, Li(CF₃SO₂)₂N, LiN(SO₃C₂F₅)₂, LiC₄F₉SO₃, LiClO₄, LiAlO₂, LiAlCl₄, LiN(CₓF₂ₓ₊₁SO₂)(C_{y}F_{2y+1}SO₂) (where x and y are natural numbers), LiCl, Lil and LiB(C₂O₄)₂ (lithium bis(oxalato) borate; LiBOB). The lithium salt may be used in a concentration ranging from about 0.1 M to about 2.0 M. When the lithium salt is included at the above concentration range, an electrolyte may have optimal electrolyte conductivity and viscosity, and may thus have enhanced performance and effective lithium ion mobility.

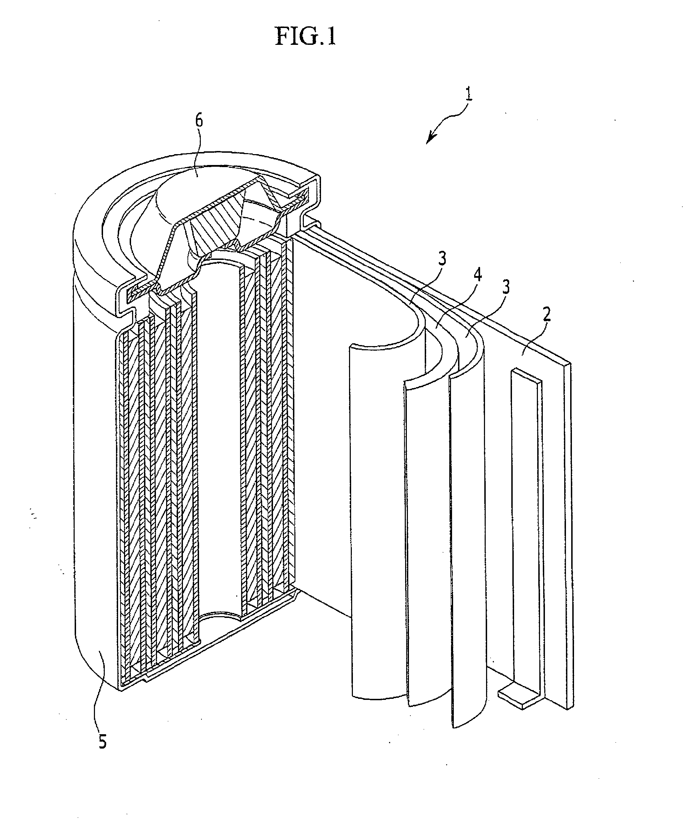

FIG. 1 is a schematic view showing the representative structure of a rechargeable lithium battery according to one embodiment. As shown in FIG. 1, a prismatic rechargeable lithium battery 1 includes a positive electrode 2, a negative electrode 4, and a separator 3 interposed between the negative electrode 2 and positive electrode 3 in a battery case 5, an electrolyte impregnating the separator 4, and a sealing member 6 sealing the battery case 5.

The rechargeable lithium battery may further include a separator between the negative electrode and the positive electrode, as needed. Non-limiting examples of a suitable separator material include polyethylene, polypropylene, polyvinylidene fluoride, and multi-layers thereof such as a polyethylene/polypropylene double-layered separator, a polyethylene/polypropylene/polyethylene triple-layered separator, and a polypropylene/polyethylene/polypropylene triple-layered separator.

The following examples illustrate this disclosure in more detail. These examples, however, are not in any sense to be interpreted as limiting the scope of this disclosure.

### Example 1

A SiCₓ (x=0.65) material was formed into a layer on a 20µm-thick Cu film using a 2-source sputtering device and Si and C targets. The resulting product was used as a negative electrode, in which a negative active material layer including the SiCₓ (x=0.65) negative active material was disposed on a Cu current collector. Herein, the negative active material layer was 2µm thick.

### Example 2

A SiCₓ (x-0.25) material was disposed into a layer on a 20µm-thick Cu film, using a 2-source sputtering device and Si and C targets. The resulting product was used as a negative electrode, in which a negative active material layer including the SiCₓ (x=0.25) negative active material was disposed on a Cu current collector. Herein, the negative active material layer was 2µm thick.

### Example 3

A SiCₓ (x=0.95) material was disposed into a layer on a 20µm-thick Cu film, using a 2-source sputtering device and Si and C targets. The resulting product was used as a negative electrode, in which a negative active material layer including the SiCₓ (x=0.95) negative active material was disposed on a Cu current collector. Herein, the negative active material layer was 2µm thick.

### Example 4

An SiCₓ (x=0.65) material was disposed to be 500µm thick on a 5µm-thick stainless steel (SUS) plate, using a 2-source sputtering device and Si and C targets. The SiCₓ (x=0.65) material layer was peeled off from the stainless steel plate. This peeled material was ground into powder with a size of about 10µm, preparing a negative active material. 87 wt% of the negative active material was mixed with 10 wt% of a polyimide binder and 3 wt% of acetylene black in an N-methylpyrrolidone solvent. The mixture was coated on a Cu film and dried and compressed in a common method, fabricating a negative electrode.

### Example 5

A SiCₓ (x=0.05) material was disposed into a layer on a 20µm-thick Cu film using a 2-source sputtering device and Si and C targets. The resulting product was used as a negative electrode, in which a negative active material layer including the SiCₓ (x=0.05) negative active material was disposed on a Cu current collector. Herein, the negative active material layer was 2µm thick.

### Example 6

A SiCₓ (x=1.5) material was disposed into a layer on a 20µm-thick Cu film using a 2-source sputtering device and Si and C targets. The resulting product was used as a negative electrode, in which a negative active material layer including the SiCₓ (x=1.5) negative active material was disposed on a Cu current collector. Herein, the negative active material layer was 2µm thick.

### Example 7

An SiCₓ (x=0.65) material was disposed into a 500µm-thick layer on a 5mm-thick stainless steel (SUS) plate using a 2-source sputtering device and Si and C targets. The SiCₓ (x=0.65) material layer was peeled off from the stainless steel plate. The peeled layer was ground into powder with a size of about 10µm.

The acquired SiCₓ (x=0.65) material was positioned on a glass board, and the glass board was positioned in the center of a tube furnace. The tube furnace was filled with argon gas to prevent air from entering the tube.

Next, the tube furnace was heated to 500°C and then filled with a gas mixture of toluene and argon gas mixed in a volume% of 50:50 for 30 minutes and with argon gas again. The tube furnace was cooled to room temperature and then allowed to stand at the same room temperature, preparing a negative active material including a SiCₓ (x=0.65) material and an amorphous carbon layer with conductivity thereon. Herein, the carbon layer was included in an amount of 5 wt% based on the entire weight of the SiCₓ (x=0.65) material including the carbon layer thereon.

The negative active material was used to fabricate a negative electrode according to the same method as Example 4.

### Comparative Example 1

A SiOₓ (x=1.0) material was disposed to be 20µm thick on a Cu film by radiating an energy beam on Si and SiO₂ targets in a thermal deposition device. The prepared product was used as a negative electrode, in which a negative active material layer including the SiOₓ (x=1.0) negative active material was disposed on a Cu current collector. Herein, the negative active material layer was 2µm thick.

### Comparative Example 2

A negative electrode was fabricated according to the same method as Example 1, except for forming a SiCₓ (x=1.6) material layer on a 20µm-thick Cu film by using a 2-source sputtering device and Si and C targets.

### Comparative Example 3

A negative electrode was fabricated according to the same method as Example 1, except for forming a SiCₓ (x=0.02) material layer on a 20µm-thick Cu film by using a 2-source sputtering device and Si and C targets.

### Comparative Example 4

A negative electrode was fabricated according to the same method as Example 1, except for forming a 500µm-thick SiCₓ (x=0.65) material layer on a 5mm-thick stainless steel (SUS) plate by using a 2-source sputtering device and Si and C targets. The SiCₓ (x=0.65) material was peeled off from the stainless steel plate and then ground into powder with a size of about 10µm.

The prepared SiCₓ (x=0.65) material was heated at 1200°C under an argon atmosphere. During the heating process, crystalline SiCₓ (x=0.65) and Si that do not react with lithium were prepared.

The SiCₓ (x=0.65) and Si materials were positioned on a glass board. The glass board was positioned in the center of a tube furnace and then filled with argon gas to prevent air from entering the tube.

Next, the tube furnace was heated to 500°C and then filled with a gas mixture of toluene and argon gas mixed in a volume% of 50:50 for 30 minutes, and then with argon gas again. The tube furnace was cooled to room temperature and allowed to stand at the same temperature, preparing a negative active material including a SiCₓ (x=0.65) material and an amorphous carbon layer with conductivity thereon. Herein, the carbon layer was included in an amount of 5 wt% based on the entire weight of the SiCₓ (x=0.65) and Si materials having the carbon layer.

The negative active material was used to fabricate a negative electrode according to the same method as Example 4.

### Comparative Example 5

Si and graphite powders were mixed in a ratio of 35 wt%:65 wt%. The mixture was used as a negative active material.

87 wt% of the negative active material was mixed with 10 wt% of a polyimide binder and 3 wt% of acetylene black in an N-methylpyrrolidone solvent. The mixture was coated on a Cu film and then dried and compressed, fabricating a negative electrode in a common method.

### * Fabrication of a half-cell

The negative electrodes according to Examples 1 to 7 and Comparative Examples 1 to 5 were used with a lithium metal counter electrode to fabricate a half-cell. The half-cells were measured regarding reversible capacity and initial efficiency. The results are provided in the following Table 1. The initial efficiency was calculated as initial discharge capacity / initial charge capacity by measuring their initial charge capacities, when the cells were charged with 0.05C up to 0V (vs. Li/Li⁺) at 25°C, and their initial discharge capacities, when discharged with 0.05C up to 1.5V (vs. Li/Li⁺).

### * Fabrication of a rechargeable lithium battery

95 wt% of a LiCoO₂ positive active material, 3 wt% of polyvinylidene fluoride, and 2 wt% of acetylene black were mixed in an N-methylpyrrolidone solvent, preparing a positive active material slurry. The slurry was coated on an Al film, fabricating a positive electrode.

The positive electrode and each negative electrode according to Examples 1 to 7 and Comparative Examples 1 to 5 were used together, fabricating a rechargeable lithium battery. Herein, an electrolyte solution was prepared by dissolving 1.0M LiPF₆ in a solvent of ethylene carbonate and diethylene carbonate mixed in a volume ratio of 1:1.

The rechargeable lithium battery was repeatedly charged and discharged 300 times at 0.2C to 4.2V at 45°C and discharged at 1.0C to 3V.

The rechargeable lithium battery was evaluated regarding cycle-life characteristic by calculating a percentage of discharge capacity after being charged and discharged once against discharge capacity after being charged and discharged 300 times. The results are provided in the following Table 1.

**Table 1**

| | Negative active material | Property | Capacity (mAh/g) | Efficiency (%) | 300^{th} cycle-life (%, 45°C) |
|---|---|---|---|---|---|
| Example 1 | SiCₓ (x=0.65) | amorphous | 2520 | 93 | 82 |
| Example 2 | SiCₓ (x=0.25) | amorphous | 3020 | 95 | 75 |
| Example 3 | SiCₓ (x=0.95) | amorphous | 1800 | 91 | 87 |
| Example 4 | SiCₓ (x=0.65) | amorphous | 2415 | 90 | 76 |
| Example 5 | SiCₓ (x=0.05) | amorphous | 3670 | 97 | 71 |
| Example 6 | SiCₓ (x=1.5) | amorphous | 820 | 77 | 83 |
| Example 7 | SiCₓ (x=0.65)+carbon coating layer | amorphous | 2230 | 93 | 81 |
| Comparative Example 1 | SiOₓ (x=1.0) | amorphous | 1450 | 65 | 25 |
| Comparative Example 2 | SiCₓ (x=1.6) | amorphous | 230 | 51 | 80 |
| Comparative Example 3 | SiCₓ (x=0.02) | amorphous | 3350 | 98 | 5 |
| Comparative Example 4 | SiCₓ (x=0.65)+carbon coating layer | crystalline | 250 | 80 | 23 |
| Comparative Exampe 5 | Si powder + carbon powder 65% | crystalline | 1500 | 63 | 32 |

As shown in Table 1, rechargeable lithium batteries including the negative active materials according to Examples 1 to 7 had excellent capacity, efficiency, and cycle-life characteristics. On the contrary, rechargeable lithium batteries including the negative active materials according to Comparative Examples 1, 3, and 4 had a deteriorated cycle-life characteristic. In particular, the one of Comparative Example 3 had a sharply deteriorated cycle-life characteristic. In addition, the one of Comparative Example 2 had a little appropriate cycle-life but very low capacity. In addition, the ones of Comparative Examples 4 and 5 had bad cycle-life characteristics.

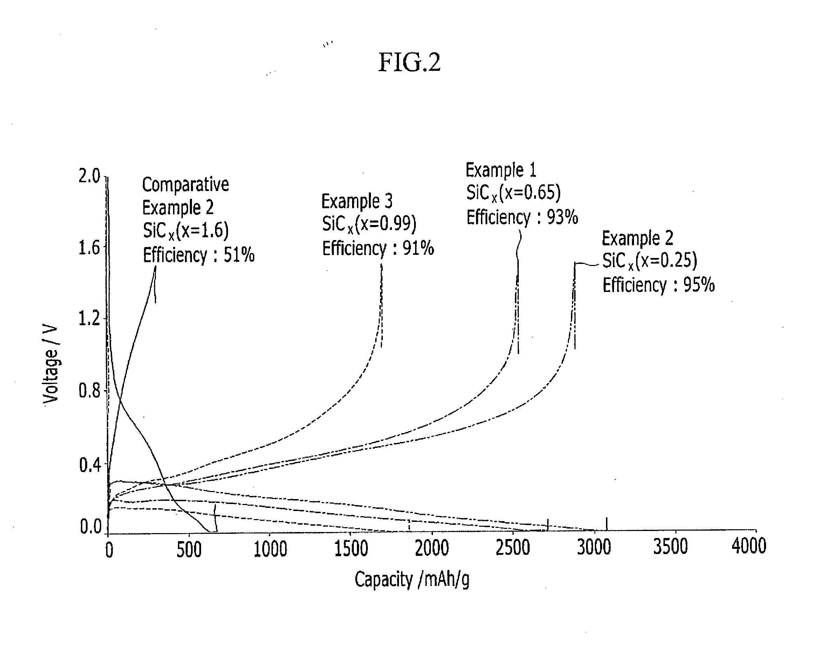

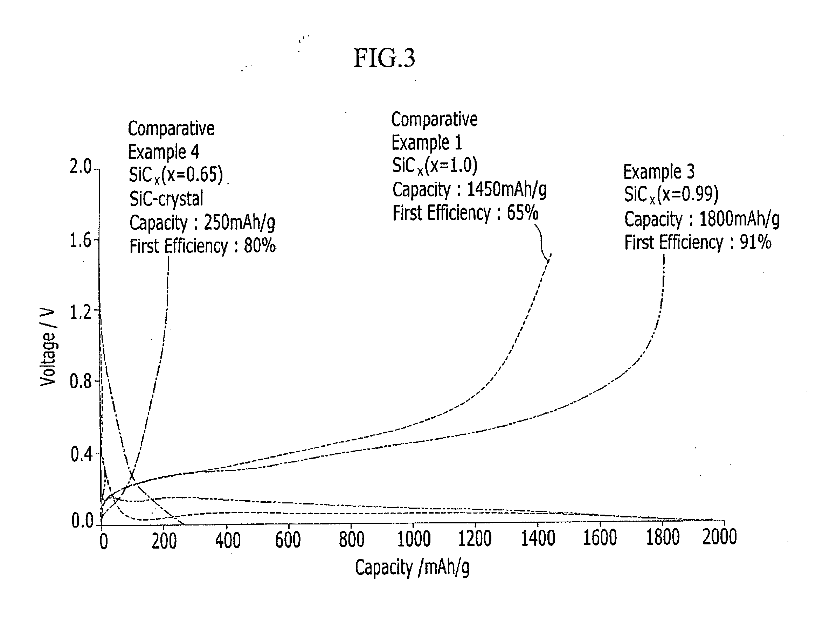

Furthermore, FIG. 2 provides initial charge and discharge characteristics and efficiency of the ones according to Examples 1 to 3 and Comparative Example 2. FIG. 3 shows charge and discharge characteristics and efficiency of the ones according to Example 3 and Comparative Examples 1 and 4.

As shown in FIG. 2, the heterogeneous phenomenon occurred in the one having an x value of more than 1.5 according to Comparative Example 2, and crystalline SiC crystals which had more stable and does not react lithium, were readily generated thereon and thus had extremely increased resistance. Accordingly, it had deteriorated capacity and 51% deteriorated charge and discharge efficiency. On the contrary, the ones according to Examples 1 to 3 respectively had very high initial charge and discharge efficiencies, at 93%, 95%, and 91 %.

As shown in FIG. 3, the one including a SiOₓ (x=1.0) negative active material according to Comparative Example 1 had small discharge capacity against initial charge due to reaction of lithium with oxygen, and resultantly had a 65% decreased initial efficiency. In addition, the one of Comparative Example 4 had about initial efficiency of 80%. However, the one of Example 3 had high capacity very high charge and discharge efficiency and of 91 %.

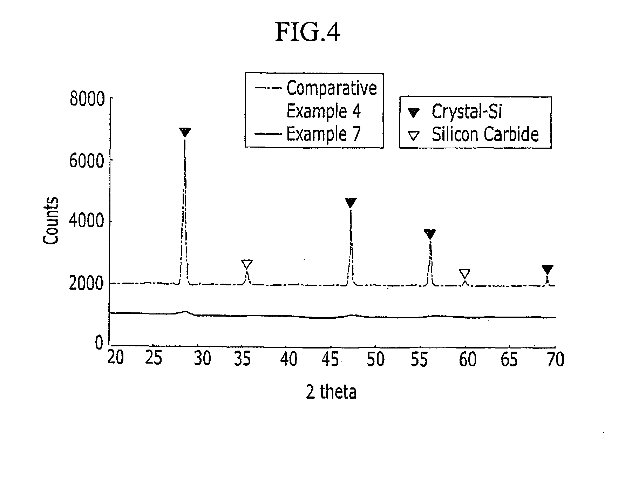

In addition, materials before the coating in Example 7 and Comparative Example 4 were measured regarding X-ray diffraction using CuKα. The result is provided in FIG. 4. As shown in FIG. 4, a SiCx (x=0.65) material prepared according to Example 4 had no peak at 2θ=35° to 38° and turned out to be amorphous. On the contrary, a carbon material of Example 4 had no peak at 2θ=35° to 38° in the X-ray diffraction.

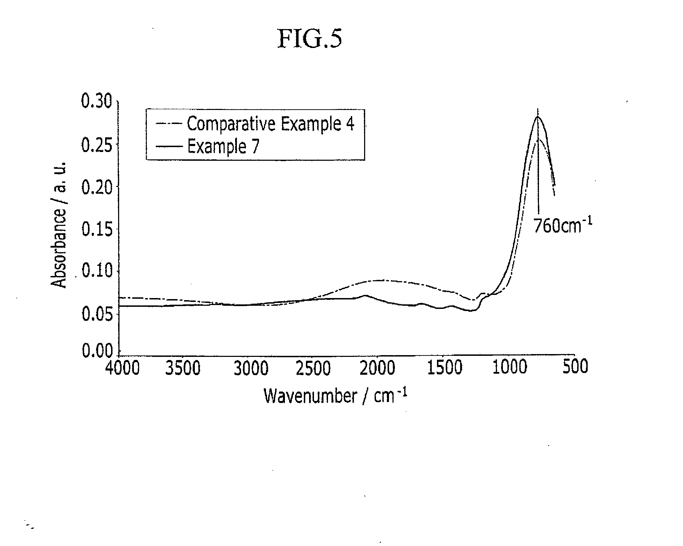

In addition, materials before being formed into a carbon layer in Example 7 and Comparative Example 4 were measured regarding IR. The results are provided in FIG. 5. As shown in FIG. 5, carbon materials before being formed into a layer in Example 7 and Comparative Example 4 had a peak around 760cm⁻¹, showing that they had a Si-C covalent bond.

Based on the results in FIGS. 4 and 5, a material prepared according to Example 7 included Si and C uniformly dispersed therein, and had an amorphous structure. The material of Comparative Example 4 included silicon and silicon carbide completely separated and non-uniformly dispersed in the particle. In addition, as shown in FIG. 5, a material prepared according to Comparative Example 4 had a peak of 760cm⁻¹, which shows silicon carbide.

As shown in FIGS. 4 and 5, when a material has a non-uniform structure inside the particle, it has a deteriorated cycle-life characteristic of a lithium rechargeable battery.

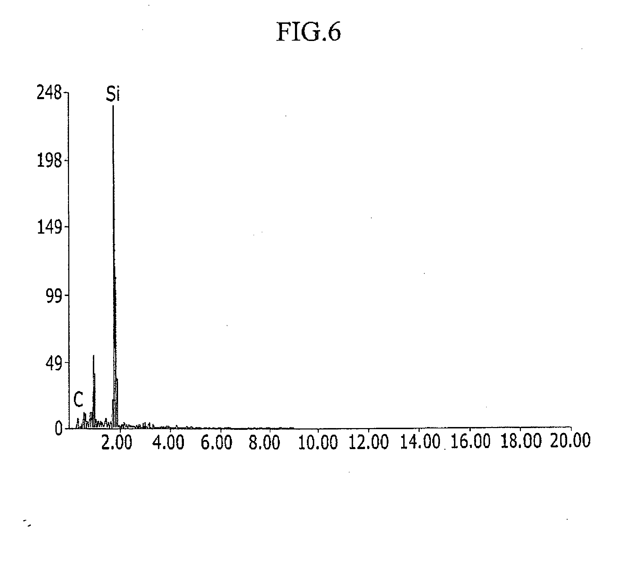

In addition, FIG. 6 shows the EPMA (electron probe micro-analyzer) element analysis result of a SiCₓ (x=0.65) material before being formed into a carbon layer in Example 7. As shown in FIG. 6, the prepared SiCₓ (x=0.65) compound included Si and C elements.

### Example 8

A SiCₓ (x=0.65) material was disposed into a 500µm-thick layer on a stainless steel plate using a 2-source sputtering device and Si and C targets. The SiCₓ (x=0.65) material was peeled off from the stainless steel plate and then ground into powder with a size of about 10µm, preparing an amorphous SiCₓ (x=0.65) material.

Amorphous carbon particles were prepared by blowing air into a petroleum-based pitch, subjecting it to infusible treatment at 400°C for 2 hours, heat-treating the infusible product at 1200°C under an argon atmosphere, and grinding it into a powder with a size of about 10µm. When the resulting product was measured regarding XRD by using CuKα, it had an interlayer spacing d002 of about 0.35nm and Lc of about 5nm on a 002 side.

The amorphous SiCₓ (x=0.65) material was mixed with amorphous carbon particles in a weight ratio of about 50:50, preparing a negative active material. 87 wt% of the negative active material was mixed with 10 wt% of a polyimide binder and 3 wt% of acetylene black in an N-methylpyrrolidone solvent. The mixture was coated on a Cu film and dried and compressed in a common method, fabricating a negative electrode.

On the other hand, a positive electrode was fabricated by mixing about 95 wt% of a LiCoO₂ positive active material, about 3 wt% of polyvinylidene fluoride, and about 2 wt% of acetylene black in an N-methylpyrrolidone solvent to prepare positive active material slurry and coating the slurry on an Al film.

The negative and positive electrodes were used to fabricate a rechargeable lithium battery. Herein, an electrolyte solution was prepared by dissolving 1.0M LiPF₆ in a solvent of ethylene carbonate and diethylene carbonate mixed in a volume ratio of about 1:1.

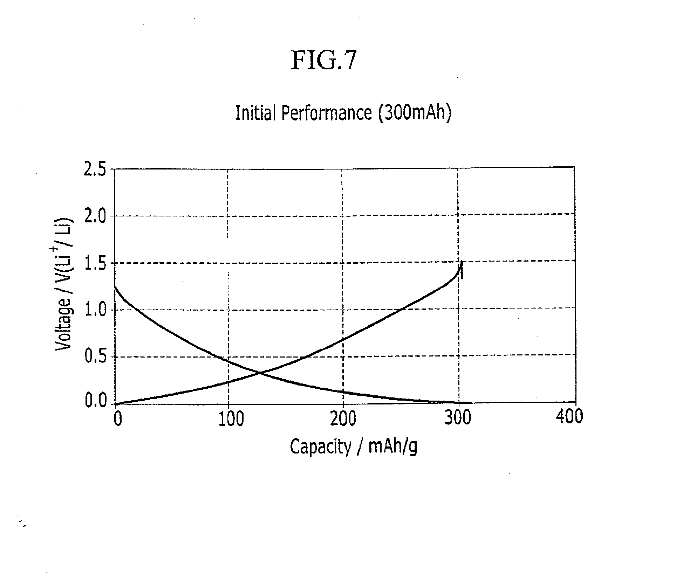

The reversible capacity of the amorphous carbon particles was measured by the following procedure. The amorphous carbon particles, a polyvinylidene fluoride binder and an acetylene black conductive material was mixed in an N-methyl pyrrolidone solvent at a weight ratio of 95 : 3 : 2, to prepare a slurry. The slurry was coated on a Cu foil to produce a negative electrode. Using the negative electrode and a lithium metal counter electrode, a coin cell was fabricated. The coin cell was charged at 0.2C constant current to 0V (Li⁺/Li) and discharged at 0.2C constant current to 1.5V (Li⁺/Li). The measured reversible capacity was shown in FIG. 7. As shown in FIG. 7, the amorphous carbon particle had reversible capacity in a Li⁺/Li potential region ranging from 0.2 to 1.5V, and 70% of the entire reversible capacity in the same potential range.

### Example 9

A rechargeable lithium battery was fabricated according to the same method as Example 8, except for preparing a negative active material by grinding an amorphous SiCₓ (x=0.25) material prepared by disposing a SiCₓ (x=0.25) material on a stainless steel plate using a 2-source sputtering device and Si and C targets according to the same method as Example 8, and mixing the ground product with the amorphous carbon particles of Example 8 in a weight ratio of about 50:50.

### Example 10

A rechargeable lithium battery was fabricated according to the same method as Example 8, except for preparing a negative active material by grinding an amorphous SiCₓ (x=0.95) material prepared by disposing a SiCₓ (x=0.95) material on a stainless steel plate using a 2-source sputtering device and Si and C targets according to the same method as Example 8, and mixing the ground product with the amorphous carbon particles of Example 8 in a weight ratio of 50:50.

### Example 11

The SiCₓ (x=0.65) material prepared according to Example 1 was ground and positioned on a glass board, and the glass board was positioned in the center of a tube furnace. The tube furnace was filled with argon gas to prevent air from entering the tube.

Next, the tube furnace was heated to about 500°C and filled with a gas mixture of toluene and argon gas mixed in a volume% of about 50:50 for about 30 minutes, and then with argon gas again. The tube furnace was cooled to room temperature and allowed to stand at the same temperature, preparing a negative active material including a SiCₓ (x=0.65) material coated with conductive carbon on the surface thereof. Herein, the conductive carbon and the SiCₓ (x=0.65) material were mixed in a ratio of about 5:95 wt%.

A rechargeable lithium battery was fabricated according to the same method as Example 8, except for preparing a negative active material by mixing the the amorphous carbon particles of Example 8 in a weight ratio of 50:50.

### Comparative Example 6

A SiOₓ (x=1.0) material was thermally deposited to be 500µm thick on a stainless plate by radiating an energy beam on Si and SiO₂ targets in a thermal deposition device.

Next, the deposited SiOₓ (x=1.0) was peeled off from the stainless plate and ground into SiOₓ (x=1.0) powder with a size of about 10µm.

Then, a rechargeable lithium battery was fabricated except for preparing a negative active material by mixing the SiOₓ (x=1.0) powder with the amorphous carbon particles of Example 8 in a weight ratio of about 50:50.

### Comparative Example 7

A rechargeable lithium battery was fabricated according to the same method as Example 8, except for preparing a negative active material by grinding an amorphous SiCₓ (x=1.6) material prepared by being disposed on a stainless steel plate using a 2-source sputtering device and Si and C targets, and mixing the ground product with the amorphous carbon particles of Example 8 in a weight ratio of about 50:50.

### Comparative Example 8

A rechargeable lithium battery was fabricated according to the same method as Example 8, except for preparing a negative active material by grinding an amorphous SiCₓ (x=0.02) material prepared by being disposed on a stainless steel plate using a 2-source sputtering device and Si and C targets, and mixing the ground product with the amorphous carbon particles of Example 8 in a weight ratio of 50:50.

### Comparative Example 9

The SiCₓ (x=0,65) material was peeled off from a stainless steel plate and ground into powder with a size of about 10µm according to Example 8. The SiCₓ (x=0.65) powder was heated at about 1200°C under an argon atmosphere, acquiring crystalline SiCₓ (x=0.65) and Si that do not react with lithium.

Then, a rechargeable lithium battery was fabricated according to the same method as Example 8, except for preparing a negative active material by mixing the SiCₓ (x=65) material with the amorphous carbon of Example 8 in a ratio of about 50:50 wt%.

### Comparative Example 10

A rechargeable lithium battery was fabricated according to the same method as Example 8, except for using graphite powder with an average particle diameter of about 10µm instead of amorphous carbon.

The rechargeable lithium batteries according to Examples 8 to 11 and Comparative Examples 6 to 10 were evaluated regarding charge efficiency (rapid charge and discharge) by comparing their capacities when charged at 30C to 4.2V with the capacities when charged at 0.2C to 4.2V as 100%. The results are provided in the following Table 2. In addition, their discharge efficiencies (rapid charge and discharge) were calculated by comparing the discharge capacities when discharged at 0.2C to 2.5V from their charge status at 0.2C to 4.2V with the discharge capacities at 30C to 2.5V as 100%. The results are provided in the following Table 2.

Furthermore, the rechargeable lithium batteries according to Examples 8 to 11 and Comparative Examples 6 to 10 were evaluated regarding cycle-life characteristics by calculating a percentage of the discharge capacities at the 300^{th} charge and discharge against the 1^{st} discharge capacities after being charged 300 times at 4C at a constant current charge to 4.2V at 45°C, and discharged at 4.0C at a constant current discharge to 3V. The results are provided in the following Table 2.

**Table 2**

| | Negative active material | | Silicon-containing compound property | Ratio of A1 and A2 (weight ratio) | Charge efficiency (30C/0/2C, %) | Discharge efficiency (30C/0.2C, %) | 300th cycle-life (%, 45°C) |
|---|---|---|---|---|---|---|---|
| | silicon compound A1 | carbon-based A2 | | | | | |
| Example 8 | SiCₓ(x=0.65) | amorphous carbon | amorphous | 50:50 | 72 | 81 | 81 |
| Example 9 | SiCₓ(x=0.25) | amorphous carbon | amorphous | 50:50 | 68 | 78 | 72 |
| Example 10 | SiCₓ (x=0.95) | amorphous carbon | amorphous | 50:50 | 75 | 84 | 84 |
| Example 11 | SiCₓ with a carbon coating layer (x=0.65) | amorphous carbon | amorphous | 50:50 | 80 | 85 | 85 |
| Comparative Example 6 | SiOₓ (x=1.0) | amorphous carbon | amorphous | 50:50 | 21 | 42 | 35 |
| Comparative Example 7 | SiCₓ (x=1.6) | amorphous carbon | amorphous | 50:50 | 30 | 37 | 25 |
| Comparative Example 8 | SiCₓ (x=0.02) | amorphous carbon | amorphous | 50:50 | 35 | 37 | 80 |
| Comparative Example 9 | SiCₓ (x=0.65) | crystalline | amorphous | 50:50 | 60 | 65 | 5 |
| Comparative Example 10 | SiCₓ (x=0.65) | graphite | crystalline | 50:50 | 15 | 42 | 23 |

As shown in Table 2, the rechargeable lithium batteries respectively including the negative active materials according to Examples 8 to 11 had better high input and output characteristics (charge efficiency and discharge efficiency) and cycle-life characteristics than the ones of Comparative Examples 6 to 10.

The one of Comparative Example 6 had bad a high input and output characteristic, because oxygen in the SiOₓ negative active material reacted with Li and thereby produced Li₂O, which is a strong alkali, and the Li₂O as a catalyst decomposed an electrolyte solution and formed a layer on the surface of a negative electrode, which works as a resistance component.

In addition, the heterogeneous phenomenon occurred in the one having an x value of more than 1.5 according to Comparative Example 7, and crystalline SiC crystals which had more stable and are an insulator against lithium, were readily generated thereon. Accordingly, it might have extremely high resistance and deteriorated high input and output characteristics.

In general, the smaller an x value is, the higher capacity a lithium rechargeable battery has. However, when C was not included like Comparative Example 8, the negative active material of Comparative Example 8 might have broken particles due to a weak covalent bond inside the particles when lithium was intercalated/deintercalated. Accordingly, a battery with high capacity may have a deteriorated cycle-life characteristic.

On the other hand, since a crystalline SiCₓ (x=0.65) in Comparative Example 9 included crystalline SiC fine-crystals, that is, has a break on the interface of Si and C bulk sides during repeated charges when Si and C were non-uniform, it may deteriorate current collecting and thus the cycle-life characteristic.

Furthermore, in Comparative Example 9 including a mixture of a SiCₓ compound with graphite instead of amorphous carbon, due to large resistance of the graphite, Li may be slowly inserted into graphite. Thus, Li may favorably inserted to SiCₓ than to graphite, bringing about polarization (V=IR, V increases due to high resistance when a large current flows). The polarization may cause a battery to instantly reach a charge-ending voltage, rather than charging the battery. In addition, the negative active material of Comparative Example 9 may not be appropriate for high rate charge and discharge, since lithium included in graphite may not be well released into an electrolyte during the discharge.

While this disclosure has been described in connection with what is presently considered to be practical exemplary embodiments, it is to be understood that the invention is not limited to the disclosed embodiments, but, on the contrary, is intended to cover various modifications and equivalent arrangements included within the scope of the appended claims.

## Claims

1. A negative active material for a rechargeable lithium battery comprising an amorphous silicon-containing compound represented by the following Chemical Formula 1,
[Chemical Formula 1] SiCₓ
wherein, 0.05 ≤ x ≤ 1.5

2. A negative active material of claim 1, wherein the x is in a range of 0.25 to 0.95.

3. A negative active material according to claim 1 or 2, wherein the silicon-containing compound has a peak ranging from 740cm⁻¹ to 780cm⁻¹ in Fourier transform infrared spectroscopy (FT-IR) analysis.

4. A negative active material according to any one of claims 1 to 3, wherein the silicon-containing compound has no peak ranging from 35° to 38° in X-ray diffraction (XRD) measurement using CuKα.

5. A negative active material according to any one of claims 1 to 4, further comprising a carbon layer forming a surface layer on the negative active material, optionally wherein the carbon layer is amorphous.

6. A negative active material according to claim 5, wherein the carbon layer is comprised in an amount ranging from 5 wt% to 20 wt% based on the entire weight of a silicon-containing compound and the carbon layer thereon.

7. A negative active material according to any one of claims 1 to 6, wherein negative active material further comprises an amorphous carbon-based material.

8. A negative active material according to claim 7, wherein the amorphous carbon-based material is mixed with the silicon-containing compound in a ratio of 10:90 wt% to 90:10 wt%, optionally wherein the silicon-containing compound is mixed with the amorphous carbon-based material in a ratio ranging from 20:80 wt% to 60:40 wt%.

9. A negative active material according to claim 8, wherein the silicon-containing compound in the form of particles is mixed with the amorphous carbon-based material, the particles of silicon-containing compound having an average particle size ranging from 0.1 µm to 30µm.

10. A negative active material according to any one of claims 7 to 9, wherein the amorphous carbon-based material has interlayer spacing d002 ranging from 0.34nm to 0.4nm in a 002 plane when the XRD is measured using CuKα.

11. A negative active material according to one of claims 7 to 10, wherein the amorphous carbon-based material has a crystal lattice size (Lc) ranging from 2nm to 5nm when the XRD is measured using CuKα.

12. A negative active material according to one of claims 7 to 11, wherein the amorphous carbon-based material has a reversible capacity in a Li/Li⁺ potential region ranging from 0.2 to 1.5V, optionally wherein the amorphous carbon-based material has 70% of the entire reversible capacity in said potential region.

13. A negative active material according to any one of claims 1 to 12, further comprising a binder, optionally wherein the silicon based compound is in the form of a powder mixed with the binder.

14. A rechargeable lithium battery comprising:
a negative electrode comprising a negative active material comprising a silicon-containing compound as set out in any one of claims 1 to 13;
a positive electrode comprising a positive active material; and
a non-aqueous electrolyte.

## Patentansprüche

1. Negatives Aktivmaterial für eine wiederaufladbare Lithiumbatterie, umfassend eine amorphe siliziumhaltige Verbindung, dargestellt durch die folgende Chemische Formel 1,
[Chemische Formel 1] SiCₓ
wobei 0,05 ≤ x ≤ 1,5.

2. Negatives Aktivmaterial nach Anspruch 1, wobei das x in einem Bereich von 0,25 bis 0,95 liegt.

3. Negatives Aktivmaterial nach Anspruch 1 oder 2, wobei die siliziumhaltige Verbindung in der Fourier-Transformations-Infrarotspektroskopie-Analyse (FT-IR-Analyse) einen Peak in einem Bereich von 740 cm⁻¹ bis 780 cm⁻¹ hat.

4. Negatives Aktivmaterial nach einem der Ansprüche 1 bis 3, wobei die siliziumhaltige Verbindung in der Röntgenbeugungsmessung (XRD-Messung) unter Verwendung von CuKα keinen Peak in einem Bereich von 35° bis 38° hat.

5. Negatives Aktivmaterial nach einem der Ansprüche 1 bis 4, ferner umfassend eine Kohlenstoffschicht, die eine Oberflächenschicht auf dem negativen Aktivmaterial bildet, wobei die Kohlenstoffschicht optional amorph ist.

6. Negatives Aktivmaterial nach Anspruch 5, wobei die Kohlenstoffschicht in einer Menge von 5 Gew.-% bis 20 Gew.-% auf der Grundlage des Gesamtgewichts einer siliziumhaltigen Verbindung und der Kohlenstoffschicht darauf enthalten ist.

7. Negatives Aktivmaterial nach einem der Ansprüche 1 bis 6, wobei das negative Aktivmaterial ferner ein amorphes Material auf Kohlenstoffbasis umfasst.

8. Negatives Aktivmaterial nach Anspruch 7, wobei das amorphe Material auf Kohlenstoffbasis in einem Verhältnis von 10:90 Gew.-% bis 90:10 Gew.-% mit der siliziumhaltigen Verbindung gemischt ist, wobei die siliziumhaltige Verbindung optional in einem Verhältnis von 20:80 Gew.-% bis 60:40 Gew.-% mit dem amorphen Material auf Kohlenstoffbasis gemischt ist.

9. Negatives Aktivmaterial nach Anspruch 8, wobei die siliziumhaltige Verbindung in Form von Teilchen mit dem amorphen Material auf Kohlenstoffbasis gemischt ist, wobei die Teilchen der siliziumhaltigen Verbindung eine durchschnittliche Teilchengröße von 0,1 µm bis 30 µm haben.

10. Negatives Aktivmaterial nach einem der Ansprüche 7 bis 9, wobei das amorphe Material auf Kohlenstoffbasis einen Schicht-zu-Schicht-Abstand d002 von 0,34 nm bis 0,4 nm in einer 002-Ebene hat, wenn die XRD unter Verwendung von CuKα gemessen wird.

11. Negatives Aktivmaterial nach einem der Ansprüche 7 bis 10, wobei das amorphe Material auf Kohlenstoffbasis eine Kristallgittergröße (Lc) von 2 nm bis 5 nm hat, wenn die XRD unter Verwendung von CuKα gemessen wird.

12. Negatives Aktivmaterial nach einem der Ansprüche 7 bis 11, wobei das amorphe Material auf Kohlenstoffbasis eine reversible Kapazität in einer Li/Li⁺-Potentialregion von 0,2 bis 1,5 V hat, wobei das amorphe Material auf Kohlenstoffbasis optional 70% der gesamten reversiblen Kapazität in der Potentialregion hat.

13. Negatives Aktivmaterial nach einem der Ansprüche 1 bis 12, ferner umfassend ein Bindemittel, wobei die Verbindung auf Siliziumbasis optional in Form eines mit dem Bindemittel gemischten Pulvers vorliegt.

14. Wiederaufladbare Lithiumbatterie, umfassend:
eine negative Elektrode, umfassend ein negatives Aktivmaterial, umfassend eine siliziumhaltige Verbindung nach einem der Ansprüche 1 bis 13,
eine positive Elektrode, umfassend ein positives Aktivmaterial, und
einen nichtwässerigen Elektrolyt.

## Revendications

1. Matériau actif négatif pour une batterie au lithium rechargeable comprenant un composé contenant du silicium amorphe représenté par la formule chimique 1 suivante,
[Formule chimique 1] SiCₓ
dans laquelle 0,05 ≤ x ≤ 1,5.

2. Matériau actif négatif selon la revendication 1, dans lequel x est situé dans la plage de 0,25 à 0,95.

3. Matériau actif négatif selon la revendication 1 ou 2, dans lequel le composé contenant du silicium a un pic allant de 740 cm⁻¹ à 780 cm⁻¹ dans l'analyse par spectroscopie infrarouge à transformée de Fourier (IR-TF).

4. Matériau actif négatif selon l'une quelconque des revendications 1 à 3, dans lequel le composé contenant du silicium n'a pas de pic allant de 35° à 38° dans la mesure par diffraction des rayons X (XRD) utilisant CuKα.

5. Matériau actif négatif selon l'une quelconque des revendications 1 à 4, comprenant en outre une couche de carbone formant une couche de surface sur le matériau actif négatif, la couche de carbone étant éventuellement amorphe.

6. Matériau actif négatif selon la revendication 5, dans lequel la couche de carbone est comprise en une quantité allant de 5 % en poids à 20 % en poids sur la base du poids total d'un composé contenant du silicium et de la couche de carbone par-dessus.

7. Matériau actif négatif selon l'une quelconque des revendications 1 à 6, dans lequel le matériau actif négatif comprend en outre un matériau à base de carbone amorphe.

8. Matériau actif négatif selon la revendication 7, dans lequel le matériau à base de carbone amorphe est mélangé avec le composé contenant du silicium en un rapport de 10/90 % en poids à 90/10 % en poids, le composé contenant du silicium étant éventuellement mélangé avec le matériau à base de carbone amorphe en un rapport allant de 20/80 % en poids à 60/40 % en poids.

9. Matériau actif négatif selon la revendication 8, dans lequel le composé contenant du silicium sous la forme de particules est mélangé avec le matériau à base de carbone amorphe, les particules du composé contenant du silicium ayant une taille moyenne de particules allant de 0,1 µm à 30 µm.

10. Matériau actif négatif selon l'une quelconque des revendications 7 à 9, dans lequel le matériau à base de carbone amorphe a un espacement intercouche d002 allant de 0,34 nm à 0,4 nm dans un plan 002 quand la XRD est mesurée en utilisant CuKα.

11. Matériau actif négatif selon l'une quelconque des revendications 7 à 10, dans lequel le matériau à base de carbone amorphe a une taille de réseau cristallin (Lc) allant de 2 nm à 5 nm quand la XRD est mesurée en utilisant CuKα.

12. Matériau actif négatif selon l'une quelconque des revendications 7 à 11, dans lequel le matériau à base de carbone amorphe a une capacité réversible dans une plage de potentiels Li/Li⁺ allant de 0,2 à 1,5 V, le matériau à base de carbone amorphe ayant éventuellement 70 % de la capacité totale réversible dans ladite plage de potentiels.

13. Matériau actif négatif selon l'une quelconque des revendications 1 à 12, comprenant en outre un liant, le composé à base de silicium étant éventuellement sous la forme d'une poudre mélangée avec le liant.

14. Batterie au lithium rechargeable, comprenant :
une électrode négative comprenant un matériau actif négatif comprenant un composé contenant du silicium tel que défini selon l'une quelconque des revendications 1 à 13 ;
une électrode positive comprenant un matériau actif positif ; et
un électrolyte non aqueux.
